# EUROPEAN PATENT SPECIFICATION

(11) **EP 0 948 874 B1**
(45) Date of publication and mention of the grant of the patent: **21.05.2008**
(21) Application number: 97954673.6
(22) Date of filing: 16.10.1997
(51) Int. Cl.: H04Q 7/38, H04Q 7/32

(54) **DYNAMICALLY SELECTING A WIRELESS NETWORK OFFERING A DESIRED SERVICE FEATURE**
DYNAMISCHE AUSWAHL EINES DRAHTLOSEN NETZES WELCHES EINEM GEWÜNSCHTEN DIENST ANBIETET
SELECTION DYNAMIQUE DE RESEAU SANS FIL OFFRANT UNE FONCTION DE SERVICE DESIREE

(43) Date of publication of application: 13.10.1999
(73) Proprietor: Cingular Wireless II, LLC, Atlanta, GA 30342 (US)
(72) Inventor: LAWRENCE, Christopher, Gregory, Kirkland, WA 98034 (US); RAFFEL, Michael, Allen, Redmond, WA 98052 (US)
(74) Representative: Modiano, Micaela Nadia
(86) International application number: PCT/US1997/016149
(87) International publication number: WO 1999/021392

(56) References cited:
- EP-A- 0 781 064
- WO-A-90/13211
- WO-A-96/28947
- WO-A-97/07642
- US-A- 5 613 213

## Description

### Technical Field of the Invention

This invention relates to communications systems, and more specifically, to a wireless end-user device that is dynamically reconfigurable.

### Background of the Invention

A wireless telephone communication system typically provides services to a geographic area by dividing the area into many smaller individual radio coverage areas, know as cells in a cellular system, each of which is serviced by a transmitter-receiver station, known as a cell site. The cell sites are connected through landlines or other communication links, to so-called mobile telephone switching offices (MTSO's) which are, in turn, connected to the public switched telephone network (PSTN). Any given area is typically serviced by up to two competing wireless carriers each providing a wireless system.

As more users rely on wireless systems for delivery of communications services, many of those users are increasingly demanding from their wireless carriers at least the same sophisticated communications service features that are available from their wireline networks. In response to this need of the marketplace, some wireless carriers have enhanced their switching systems to provide features, such as call waiting, call forwarding and three-way calling, to name a few. In addition, interconnection of wireless networks allows wireless subscribers to access their pre-subscribed communications services features even when they are roaming in another wireless communications carrier's service area. In spite of these developments, a wireless user is still unable to dynamically select a communications service feature that is not pre-subscribed by the user. The unavailability of non-pre-subscribed service features stems from a variety of factors, not the least of which is the inability of a wireless communicator to dynamically select on a call-by-call basis a wireless communications carrier or network that offers the desired service feature.

In an attempt to address this problem, some wireless communicator manufacturers have included in their telephone sets multiple Number Assignment Modules (!\:A\1s) to support subscriptions to services from multiple carriers. A NAM is a memory location within the wireless communicator in which an installer technician stores an assigned telephone number and a System Identification Number (SID) which uniquely identifies a particular wireless network which is primarily intended to provide airtime service for that communicator. A conventional wireless communicator determines whether at any given time it is located within its home local service area by scanning certain frequencies to recede SIDs broadcast by wireless networks and then comparing the received SIDs to SIDs stored in the NAM.

While the provision of a NAM allows the communicator to identify the primary network to which it is pre-subscribed, it does not allow the communicator to select a network based on the availability of a desired service feature. Rather, the wireless user must possess a priori knowledge of which service feature is provided by which network. Hence, it is a continuing problem for wireless users to transparently access service features from different wireless carriers without pre-subscription to each one of those wireless carriers.

EP-A-0781064 discloses a multi-mode mobile terminal having a transceiver, an antenna, a microphone and speaker, a controller for controlling said transceiver, and a user input having a service request selector for selecting a service from among a plurality of services after having downloaded all available information data from all available networks.
WO 97/07642 discloses a removable user identity module for accessing different services and networks depending on the terminal carrying the module.

### Summary of the Invention

The present invention provides a method and wireless communicator for communicating on a wireless network providing a selected service according to the appended claims 1 and 5. In accordance with the method, a wireless communicator is tuned to a first signaling control channel broadcast by a wireless network. The first channel identifies one or more services provided over that network. This procedure is repeated for successive signaling control channels until a wireless network providing the selected service is identified. Once this has been identified, communication is conducted between the wireless communicator and the network.

In an alternative embodiment of the invention, the first channel is broadcast in a radio coverage area such as a cell and identifies one or more services provided by a wireless network in the radio coverage area. The wireless communicator tunes to the first channel and then to successive channels which identify one or more services provided by successive wireless networks in the radio coverage area. This procedure is continued until a given channel is located that identifies the selected service Communication then commences between the wireless communicator and the wireless network broadcasting the given channel.

### Brief Description of the Drawing

The sole Figure shows a simplified block diagram of wireless communicator constructed in accordance with the present invention.

### Detailed Description

The present invention is directed to a wireless communicator that is designed to dynamically identify and select from a group of wireless networks (or, alternatively, a group of subnetworks or cells) a particular network (or subnetwork or cell) which offers or supports a communications service feature requested by a user. The user may select the service feature for a short time such as for the duration of a call or for any longer duration. After the particular wireless network is chosen by the wireless communicator, the wireless communicator automatically initiates (i.e.. without the user's intervention) communication with the wireless network that provided the requested service for the delivery of the communications service feature. According to one aspect of the invention, the communications service feature requested by the user may be, for example, a cellular communications service, a Personal Communications Service (PCS), a paging or Short Message Service (SMS), or a Specialized Mobile Radio (SMR) service. The respective services may be provided by a service provider operating over the network via a service provider gateway associated therewith. Alternatively, the services may be provided by the wireless carrier itself.

In an alternative embodiment of the invention, the wireless communicator dynamically identifies and selects a radio coverage area which offers the requested service feature or features. Individual radio coverage areas, which may be cells in a cellular network, for example, are typically provided with wireless communications via two or more distinct wireless networks. The radio coverage area that is selected may be one other than the local area in which the wireless communicator is currently operating. In other words, the communicator may initiate service with a network that does not ordinarily provide local radio coverage if there is no available network normally operating in the local radio coverage area that offers the desired service feature.

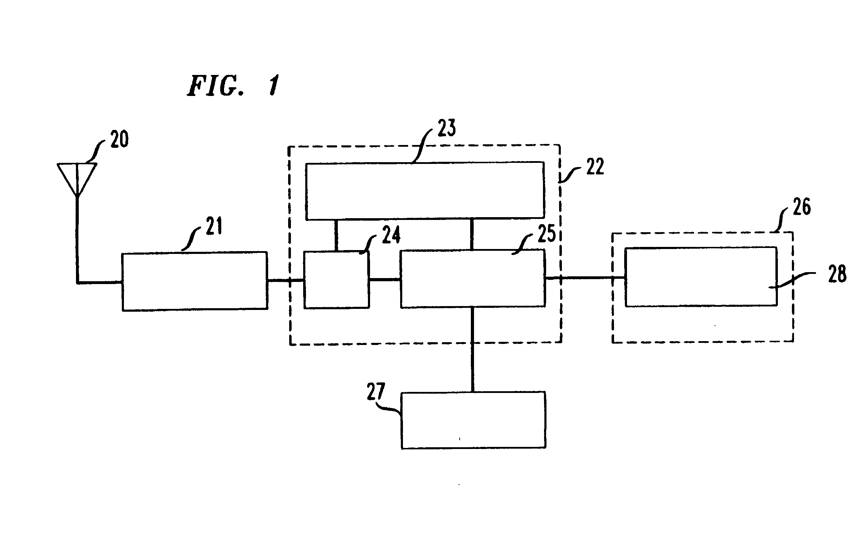

FIG. 1 shows a block diagram of a wireless communicator in accordance with the present invention. The wireless communicator includes a transceiver 21. antenna 20. controller 22. a user input 26 such as a keypad, and a speaker and microphone 27. The controller 22 processes incoming and outgoing signals and includes a microprocessor 25. a digital signal processor 24 and a memory 23. The user input 26 includes a service request selector 28 which allows the user to specify to the controller 22 the service or services that are desired. The controller 22 in turn directs the transceiver 21 to monitor signaling control channels (discussed in more detail below) broadcast by various wireless networks so that communication can be established with a network that is identified as offering the desired service or services.

In one embodiment of the invention, a wireless communicator tunes to a first signaling control channel over which a wireless network broadcasts carrier-speeific information such as a System Identification (SID) number and a service menu. The service menu lists the various service features available over that network, such as call waiting, dial forwarding, facsimile transmission, and three-way calling, for example. The wireless communicator browses the service menu to assess the availability of the communications service feature requested by the user via the service request selector 28. If the wireless network offers the communications service feature requested by the user, the communicator initiates a service request to the wireless network. If necessary, the wireless communicator registers onto the wireless network supporting the requested service. Alternatively, if the wireless communicator is already registered onto the appropriate network, the wireless communicator simply conducts communication with the network so that the desired service feature is provided to the user.

If the first wireless network to which the communicator tunes does not offer the communications service feature requested by the user, the communicator tunes to a second control channel to browse through the menu of the wireless network associated with the second control channel. The control channel tuning and menu-browsing process continues until the wireless communicator identifies a wireless or wired network that offers the communications service feature requested by the user or until the list of networks is exhausted. Thereafter, a service request is initiated to the identified network for delivery of the communications service feature desired by the user. As previously mentioned, the identified network may or may not be operational in the current local radio coverage area of the communicator. The user may also configure the device through an appropriate input to select from among a plurality of networks that each have the requisite service feature on an additional basis such as cost and speed, for example.

One of ordinary skill in the art will recognize that the signaling control channel defined by the present invention may be readily incorporated into any of the established digital cellular interface standards, including, but not limited to. EIA/TIA Standard 553. "Mobile Station-Land Station Compatibility Specification." September 1989. Electronic Industries Association. Washington, D.C.: EIA/TIA Interim standard 1S-54-B. "Cellular System Dual-Mode Mobile Station - Basestation Compatibility Standard." April. 1992. Electronic Industries Association. Washington. D.C.; and EIA/TIA Interim Standard IS-136, "Cellular System Dual-Mode Mobile Station - Basestation: Digital Control Channel Compatibility Standard." April. 1995, Electronic Industries Association, Washington, D.C. Moreover, the IS-136 standard incorporates a digital control channel that may broadcast the SID number and a service menu.

In one embodiment of the invention, the service request selector 28 is configured so that the user can select one of three different operational states, In the first operational state, upon activation of the wireless communicator, the communicator automatically begins monitoring various signaling control channels and registers onto a wireless network that offers a preselected service or services. In a second operational state, the communicator only begins monitoring signaling control channels when the user manually selects a desired service or service. Finally, in a third operational state, the communicator begins monitoring various signaling control channels to conduct communication with a network that offers a service that the communicator itself identifies as being required. For example, if the user connects facsimile equipment through an appropriate input port of the communicator, the communicator when operating in this state. will automatically attempt to identify and communicate with a wireless network offering facsimile service. In some embodiments of the invention the service request selector 28 may offer all three of these operational states or, alternatively any one or two of these operational states. The communicator also may be provided with status indicators such as LEDs, for example, that indicate the current operational state of the mode selector. Status indicators may also be provided to identify the selected service or services requested by the user.

## Claims

1. A method for communicating on a wireless network providing a selected service, said method comprising the steps of:
selecting, with a wireless communicator, one of a plurality of user-selectable operational states for the communicator; and
(a) tuning, with the wireless communicator, to a first signaling control channel broadcast in a wireless network, said first channel identifying at least one service provided over the wireless network;
(b) repeating step (a) for successive signaling control channels until a wireless network providing a preselected service is identified;
(c) conducting communication with said wireless network providing the preselected service.

2. The method of claim 1 wherein said at least one service is a personal communications service; or
wherein said at least one service is a paging service; or
wherein said at least one service is a short message service: or
wherein said first channel includes a service menu and a system identification number; or
wherein step (c) includes the step of registering onto said wireless network; or
wherein said first signaling control channel is included in a digital cellular interface standard

3. The method of claim 1, wherein said first channel includes a service menu and a system identification number and wherein said service menu comprises a service selected from the group consisting of call waiting, dial forwarding, facsimile transmission, and three-way calling.

4. The method of claim 1 wherein at least said first signaling control channel and one of said successive signaling control channels are broadcast in different radio coverage areas.

5. A wireless communicator, comprising:
a transceiver (21);
an antenna (20) coupled to said transceiver (21);
a microphone and speaker (27) for providing an audio interface,
a controller (22) for controlling, said transceiver; and
a user input (26) for receiving user-initiated requests, said user input including a service request selector (28) for selecting a service from among a plurality of services,
**characterized in that** said service request selector (28) further provides a plurality of user-selectable operational states, said transceiver (21), responsive to said service request selector, being adapted to monitor control signals broadcast from a plurality of wireless networks, said control signals identifying services provided over respective ones of said wireless networks, said transceiver (21) being further adapted to initiate communication with a wireless network broadcasting a control channel that identifies the selected service as soon as the first wireless network providing the service selected by means of said selector (28) is identified during said monitoring.

6. The communicator of claim 5 wherein in a first of said operational states the communicator is set so as to automatically perform, upon activation for a preselected service, the steps of:
(a) tuning to a first signaling control channel broadcast in a wireless network, said first channel identifying at least one service provided over the wireless network;
(b) repeating step (a) for successive signaling control channels until a wireless network providing the preselected service is identified;
(c) conducting communication with said identified wireless network providing the preselected service,

7. The communicator of claim 5 wherein in a second of said operational states the communicator is set so as to perform, subsequent to activation and upon manual selection of the user, the steps of
(a) tuning to a first signaling control channel broadcast in a wireless network, said first channel identifying at least one service provided over the wireless network;
(b) repeating step (a) for successive signaling control channels until a wireless network providing the selected service is identified;
(c) conducting communication with said identified wireless network providing the selected service.

8. The communicator of claim 5 wherein in a third of said operational states the communicator is set so as to automatically perform the following steps to conduct communication with a network offering the selected service, which is identified by the communicator itself as being required:
(a) tuning to a first signaling control channel broadcast in a wireless network, said first channel identifying at least one service provided over the wireless network;
(b) repeating step (a) for Successive signaling control channels until a wireless network providing the selected service is identified;
(c) conducting communication with said identified wireless network providing the selected service.

## Patentansprüche

1. Verfahren zur Kommunikation in einem drahtlosen Netzwerk, das einen ausgewählten Dienst bereitstellt, wobei das Verfahren folgende Schritte umfasst:
Auswahl, mit einem drahtlosen Kommunikationsgerät, eines aus einer Vielzahl von Benutzer-definierten Betriebszuständen für das Kommunikationsgerät; und
(a) Einwählen, mit dem drahtlosen Kommunikationsgerät, in einen ersten Signalgebung-Steuerkanal, der in einem drahtlosen Netzwerk gesendet wird, wobei der erste Kanal mindestens einen Dienst identifiziert, der über das drahtlose Netzwerk bereitgestellt wird,
(b) Wiederholung von Schritt (a) für darauf folgende Signalgebung-Steuerkanäle, bis ein drahtloses Netzwerk, das einen im Voraus ausgewählten Dienst bereitstellt, identifiziert ist,
(c) Durchführung von Kommunikation mit dem drahtlosen Netzwerk, das den im Voraus ausgewählten Dienst bereitstellt.

2. Verfahren gemäß Anspruch 1, worin der mindestens eine Dienst ein persönlicher Kommunikationsdienst ist, oder'
worin der mindestens eine Dienst ein Funkrufdienst ist, oder
worin der mindestens eine Dienst ein SMS-Dienst ist, oder
worin der erste Kanal ein Dienstmenü und eine System-Identifikationsnummer einschließt, oder
worin Schritt (c) den Schritt des Anmeldens beim drahtlosen Netzwerk einschließt, oder
worin der erste Signalgebung-Steuerkanal in eine digitale Mobilfunk-Schnittstellennorm eingeschlossen ist.

3. Verfahren gemäß Anspruch 1, worin der erste Kanal ein Dienstmenü, und eine System-Identifikationsnummer einschließt und
worin das Dienstmenü einen Dienst umfasst, der gewählt ist aus der Gruppe bestehend aus Anklopfen, Anrufweiterleitung, Faksimile-Kommunikation und Dreieckverbindung.

4. Verfahren gemäß Anspruch 1, worin mindestens der erste Signalgebung-Steuerkanal und einer der darauf folgenden Signalgebung-Steuerkanäle in verschiedenen Funkversorgungsgebieten gesendet werden.

5. Drahtloser Kommunikationsgerät, der Folgendes umfasst:
einen Transceiver (21),
eine Antenne (20), die mit dem Transceiver (21) gekoppelt ist,
ein Mikrofon und einen Lautsprecher (27) zur Bereitstellung einer Audio-Schnittstelle,
ein Controller (22) zum Steuern des Transceivers und
eine Benutzereingabe (26) für den Empfang von Benutzerveranlassten Anfragen, wobei die Benutzereingabe einen Dienstanforderungs-Selektor (28) zur Auswahl eines Dienstes aus einer Vielzahl von Diensten einschließt,
**dadurch gekennzeichnet, dass** der Dienstanforderungs-Selektor (28) weiter eine Vielzahl Benutzer-definierter Betriebszustände bereitstellt, wobei der Transceiver (21), der auf den Dienstanforderungs-Selektor reagiert, ausgebildet ist, um Steuersignale zu überwachen, die von einer Vielzahl drahtloser Netzwerke gesendet werden, wobei die Steuersignale Dienste identifizieren, die über entsprechende drahtlose Netzwerke bereitgestellt werden, wobei der Transceiver (21) weiter ausgebildet ist, um Kommunikation mit einem drahtlosen Netzwerk einzuleiten, das einen Steuerkanal sendet, der den ausgewählten Dienst identifiziert, sobald das erste drahtlose Netzwerk, das den mit dem Selektor (28) ausgewählten Dienst bereitstellt, während der Überwachung identifiziert wird.

6. Kommunikationsgerät gemäß Anspruch 5, wobei in einem ersten der Betriebszustände der Kommunikationsgerät so eingestellt wird, dass er bei Aktivierung-für einen im Voraus ausgewählten Dienst automatisch die folgenden Schritte durchführt:
(a) Einwählen in einen ersten Signalgebung-Steuerkanal, der in einem drahtlosen Netzwerk gesendet wird, wobei der erste Kanal mindestens einen Dienst identifiziert, der über das drahtlose Netzwerk bereitgestellt wird,
(b) Wiederholung von Schritt (a) für darauf folgende Signalgebung-Steuerkanäle, bis ein drahtloses Netzwerk, das einen im Voraus ausgewählten Dienst bereitstellt, identifiziert ist,
(c) Durchführung von Kommunikation mit dem identifizierten drahtlosen Netzwerk, das den im Voraus ausgewählten Dienst bereitstellt.

7. Kommunikationsgerät gemäß Anspruch 5, wobei in einem zweiten der Betriebszustände der Kommunikationsgerät so eingestellt wird, dass er, nach Aktivierung und bei manueller Auswahl durch den Benutzer, folgende Schritte durchführt:
(a) Einwählen in einen ersten Signalgebung-Steuerkanal, der in einem drahtlosen Netzwerk gesendet wird, wobei der erste Kanal mindestens einen Dienst identifiziert, der über das drahtlose Netzwerk bereitgestellt wird,
(b) Wiederholung von Schritt (a) für darauf folgende Signalgebung-Steuerkanäle, bis ein drahtloses Netzwerk, das den ausgewählten Dienst.bereitstellt, identifiziert ist,
(c) Durchführung von Kommunikation mit dem identifizierten drahtlosen Netzwerk, das den ausgewählten Dienst bereitstellt.

8. Kommunikationsgerät gemäß Anspruch 5, worin in einem dritten der Betriebszustände der Kommunikationsgerät so eingestellt wird, dass er automatisch die folgenden Schritte durchführt, um mit einem Netzwerk zu kommunizieren, das den ausgewählten Dienst bereitstellt, das je nach Bedarf durch den Kommunikationsgerät selbst identifiziert wird:
(a) Einwählen in einen ersten Signalgebung-Steuerkanal, der in einem drahtlosen Netzwerk gesendet wird; wobei der erste Kanal mindestens einen Dienst kennzeichnet, der über das drahtlose Netzwerk bereitgestellt wird,
(b) Wiederholung von Schritt (a) für darauf folgende Signalgebung-Steuerkanäle, bis ein drahtloses Netzwerk, das den ausgewählten Dienst bereitstellt, identifiziert ist,
(c) Durchführung von Kommunikation mit dem identifizierten drahtlosen Netzwerk, das den ausgewählten Dienst bereitstellt.

## Revendications

1. Procédé pour communiquer sur un réseau sans fil fournissant un service sélectionné, ledit procédé comportant les étapes consistant à :
sélectionner, au moyen d'un dispositif de communication sans fil, l'un d'une pluralité d'états fonctionnels, sélectionnables par un utilisateur, pour le dispositif de communication, et
(a) syntoniser, au moyen d'un dispositif de communication sans fil, à un premier canal de commande de signalisation diffusé dans un réseau sans fil, ledit premier canal identifiant au moins un service fourni sur le réseau sans fil ;
(b) répéter l'étape (a) pour des canaux de commande de signalisation successifs jusqu'à ce qu'un réseau sans fil fournissant un service présélectionné soit identifié ;
(c) mettre en oeuvre une communication avec ledit réseau sans fil fournissant le service présélectionné.

2. Procédé selon la revendication 1, dans lequel ledit au moins un service est un service de communications personnelles ; ou
dans lequel ledit au moins un service est un service de radiomessagerie ; ou
dans lequel ledit au moins un service est un service de messages courts ; ou
dans lequel ledit premier canal comporte un menu de services et un numéro d'identification de système ; ou
dans lequel l'étape (c) comporte l'étape consistant à s'enregistrer sur ledit réseau sans fil ; ou
dans lequel ledit premier canal de commande de signalisation est inclus dans une norme d'interface cellulaire numérique.

3. Procédé selon la revendication 1, dans lequel ledit premier canal comporte un menu de services et un numéro d'identification de système et dans lequel ledit menu de services comporte un service sélectionné dans le groupe comportant un appel en attente, un renvoi automatique d'appels, une émission de télécopie et une conversation à trois.

4. Procédé selon la revendication 1, dans lequel au moins ledit premier canal de commande de signalisation et l'un desdits canaux de commande de signalisation successifs sont diffusés dans différentes zones de couverture radio.

5. Dispositif de communication sans fil, comportant :
un émetteur - récepteur (21) ;
une antenne (20) couplée audit émetteur - récepteur (21) ;
un microphone et un haut-parleur (27) pour délivrer une interface audio ;
un contrôleur (22) pour commander ledit émetteur - récepteur ; et
une entrée utilisateur (26) pour recevoir des demandes initiées par un utilisateur, ladite entrée utilisateur comportant un sélecteur de demandes de services (28) pour sélectionner un service parmi une pluralité de services,
**caractérisé en ce que** ledit sélecteur de demandes de services (28) fournit en outre une pluralité d'états fonctionnels sélectionnables par un utilisateur, ledit émetteur - récepteur (21), en réponse audit sélecteur de demandes de services, étant adapté pour surveiller des signaux de commande diffusés à partir d'une pluralité de réseaux sans fil, lesdits signaux de commande identifiant des services fournis sur des réseaux sans fil respectifs desdits réseaux sans fil, ledit émetteur - récepteur (21) étant en outre adapté pour initier une communication avec un réseau sans fil diffusant un canal de commande qui identifie le service sélectionné dès que le premier réseau sans fil fournissant le service sélectionné au moyen dudit sélecteur (28) est identifié au cours de ladite surveillance.

6. Dispositif de communication selon la revendication 5, dans lequel, dans un premier état desdits états fonctionnels, le dispositif de communication est réglé de façon à mettre en oeuvre automatiquement, après activation d'un service présélectionné, les étapes consistant à :
(a) syntoniser à un premier canal de commande de signalisation diffusé dans un réseau sans fil, ledit premier canal identifiant au moins un service fourni sur le réseau sans fil ;
(b) répéter l'étape (a) pour des canaux de commande de signalisation successifs jusqu'à ce qu'un réseau sans fil fournissant le service présélectionné soit identifié ;
(c) mettre en oeuvre une communication avec ledit réseau sans fil identifié fournissant le service présélectionné.

7. Dispositif de communication selon la revendication 5, dans lequel, dans un deuxième état desdits états fonctionnels, le dispositif de communication est réglé de façon à mettre en oeuvre, subséquemment à l'activation et après une sélection manuelle par l'utilisateur, les étapes consistant à :
(a) syntoniser à un premier canal de commande de signalisation diffusé dans un réseau sans fil, ledit premier canal identifiant au moins un service fourni sur le réseau sans fil ;
(b) répéter l'étape (a) pour des canaux de commande de signalisation successifs jusqu'à ce qu'un réseau sans fil fournissant le service sélectionné soit identifié ;
(c) mettre en oeuvre une communication avec ledit réseau sans fil identifié fournissant le service présélectionné.

8. Dispositif de communication selon la revendication 5, dans lequel, dans un troisième état desdits états fonctionnels, le dispositif de communication est réglé de façon à exécuter automatiquement les étapes ci-dessous, pour mettre en oeuvre une communication avec un réseau offrant le service sélectionné, lequel service est déterminé par le dispositif de communication lui-même comme étant requis, consistant à :
(a) syntoniser à un premier canal de commande de signalisation diffusé dans un réseau sans fil, ledit premier canal identifiant au moins un service fourni sur le réseau sans fil ;
(b) répéter l'étape (a) pour des canaux de commande de signalisation successifs jusqu'à ce qu'un réseau sans fil fournissant le service sélectionné soit identifié ;
(c) mettre en oeuvre une communication avec ledit réseau sans fil identifié fournissant le service présélectionné.
